(19) Europäisches Patentamt
European Patent Office
Office européen des brevets

(11) **EP 0 714 522 B1**

(12) **FASCICULE DE BREVET EUROPEEN**

(45) Date de publication et mention
de la délivrance du brevet:
**02.11.2005 Bulletin 2005/44**

(51) Int Cl.⁷: **G02B 5/32**, G03B 21/60,
G03H 1/02

(21) Numéro de dépôt: **94919724.8**

(22) Date de dépôt: **16.06.1994**

(86) Numéro de dépôt international:
**PCT/FR1994/000727**

(87) Numéro de publication internationale:
**WO 1995/034832 (21.12.1995 Gazette 1995/54)**

(54) **ECRAN DE PROJECTION HOLOGRAPHIQUE ET PROCEDE DE REALISATION**

HOLOGRAPHISCHES PROJEKTIONSSCHIRM UND HERSTELLUNGS VERFAHREN

HOLOGRAPHIC PROJECTION SCREEN AND METHOD FOR ITS PRODUCTION

(84) Etats contractants désignés:
**DE GB IT NL**

(43) Date de publication de la demande:
**05.06.1996 Bulletin 1996/23**

(73) Titulaire: **Thales**
**75008 Paris (FR)**

(72) Inventeurs:
• **HUIGNARD, Jean-Pierre**
**F-92402 Courbevoie Cédex (FR)**
• **JOUBERT, Cécile**
**F-92402 Courbevoie Cédex (FR)**
• **LEHUREAU, Jean-Claude**
**F-92402 Courbevoie Cédex (FR)**
• **LOISEAUX, Brigitte**
**F-92402 Courbevoie Cédex (FR)**

(74) Mandataire: **Chaverneff, Vladimir**
**Marks & Clerk France**
**31-33 Avenue Aristide Briand**
**94117 Arcueil Cédex (FR)**

(56) Documents cités:
EP-A- 0 244 357      EP-A- 0 349 947
EP-A- 0 389 123      WO-A-90/15367
FR-A- 2 699 289      GB-A- 2 054 195
JP-A- 4 136 885      US-A- 3 708 217
US-A- 3 909 111      US-A- 4 447 111
US-A- 5 046 793

• P. HARIHARAN 'OPTICAL HOLOGRAPHY' 1984
, CAMBRIDGE UNIVERSITY PRESS ,
CAMBRIDGE, GB, PAGES 56-62 voir page 58,
ligne 18 - ligne 28; figure 4.10; tableau 4.1
• OPTICAL ENGINEERING, vol.33, no.4, Avril
1994, BELLINGHAM US pages 1084 - 1088
STEPHEN WADLE ET AL. 'HOLOGRAPHIC
DIFFUSERS: POLARIZATION EFFECTS'
• APPLIED OPTICS, vol.12, no.9, Septembre 1973,
NEW YORK US pages 2180 - 2184 DIETRICH
MEYERHOFER 'HOLOGRAPHIC AND
INTERFEROMETRIC VIEWING SCREENS'

**Description**

La demande concerne un écran de projection holographique et son procédé de réalisation.

Un système de projection est constitué d'une image émettrice de petite dimension, qui est agrandie par une optique adaptée et projetée sur un écran. L'image émettrice est généralement une transmittance active ou non active éclairée par une source lumineuse collimatée.

Lorsque la projection est dite frontale, le spectateur est placé du même côté que le projecteur par rapport à l'écran, qui réfléchit alors l'image vers le spectateur.

Lorsque le projecteur éclaire l'arrière de l'écran par rapport au spectateur, il s'agit d'un écran rétroprojecteur.

Compte tenu de la faible luminosité des images issues du projecteur, il est préférable que l'écran soit directif et à gain pour qu'une grande partie de la lumière émise par l'écran atteigne l'oeil du spectateur.

Par ailleurs dans le cas des écrans à projection frontale il peut être avantageux pour des raisons de commodité de pouvoir positionner le projecteur non pas au milieu par rapport à l'écran de projection mais sur les côtés ou en haut ou en bas. Ce type de fonctionnement du projecteur est obtenu habituellement en décentrant l'image émettrice par rapport à l'axe optique du système de projection.

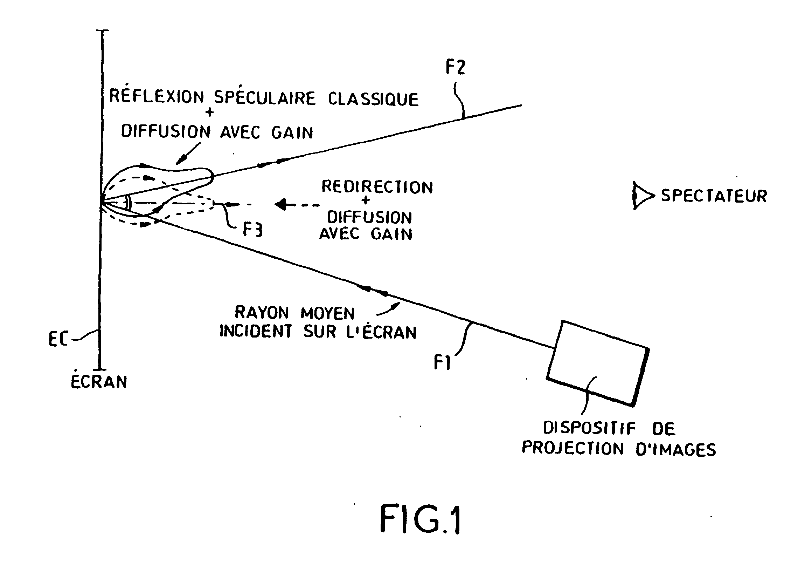

Mais pour que la lumière diffusée par l'écran atteigne le spectateur il faudrait dans ce cas que l'écran à gain possède une indicatrice de luminance hors d'axe par rapport à la direction du rayon moyen réfléchit. Ainsi comme cela est représenté en figure 1, un faisceau incident F1 (faisceau de projection) se réfléchit sur l'écran EC, de façon classique, selon une direction F2. Pour qu'il atteigne le spectateur, il faut qu'il soit dirigé selon une direction de lobe F3.

Un tel écran, échappant par principe aux lois de la réflexion géométrique, n'est pas réalisable dans une structure classique. On sait par contre réaliser en optique classique des écrans effectuant en transmission ces fonctions diffusion avec gain "hors d'axe". Il s'agit de structures complexes de type Fresnel lenticulaire. Par conséquent, les système de type projection frontale utilisent des écrans soit à très faible gain (salle de cinéma), soit de type Lambertient.

On note par ailleurs, comme inconvénient majeur des dispositifs à projection frontale, le faible contraste de l'image projetée dès lors que l'éclairage ambiant augmente. Ceci est lié à la nature même de l'écran, de type surface blanche, qui rediffuse une grande partie de lumière incidente quelle que soit son origine.

On préfère donc généralement des dispositifs de type "rétro projection" dont l'écran diffusant possède une "black matrix" qui permet d'augmenter sensiblement le contraste de l'image pour un même éclairage ambiant.

Pour illustrer l'état de la technique, on cite le document suivant décrivant différents dispositifs de projection :

M. KAWASHIMA et al, "Display and projection devices for HDTV", IEEE Transactions on Consumer Electronics, Vol 34, N°1, February 1988, 100-110.

On connaît d'après le document JP 04-136885 un écran de projection holographique présentant une réflectivité élevée pour les couleurs rouge, verte et bleue, mais la lumière ambiante est ajoutée à la lumière réfléchie vers l'observateur.

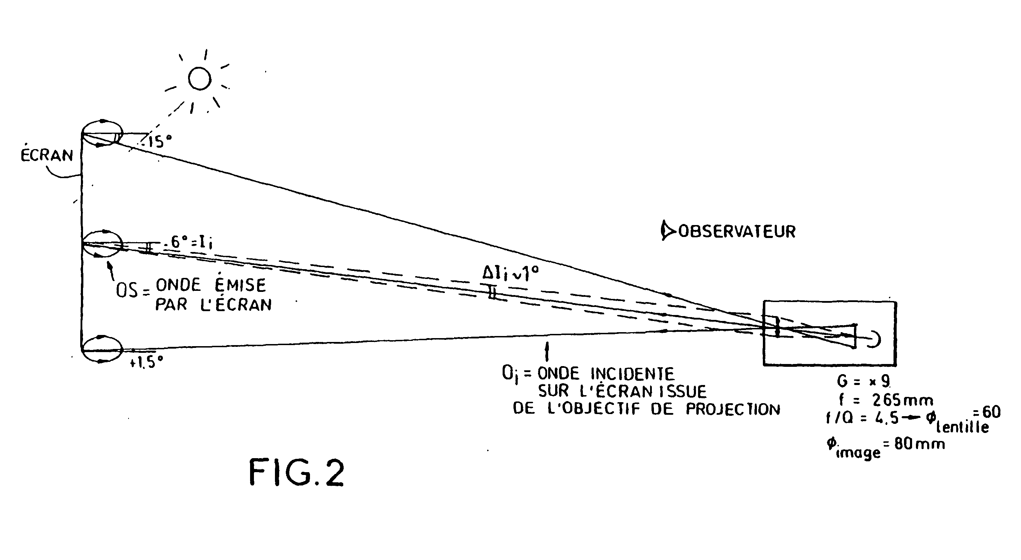

L'invention a pour objet un écran réalisé par une méthode holographique plus spécifiquement adapté à la projection frontale et permettant de fournir les différentes caractéristiques souhaitées illustrées sur la figure 2.

La quantité de lumière qui atteint l'oeil du spectateur dépend :

- de la direction du rayon moyen issu de l'image à projeter réfléchie par l'écran vers le spectateur ;
- du lobe de diffusion de la lumière autour du rayon moyen.

Les principales caractéristiques souhaitées sont :

- re-direction en chaque point de l'écran du rayon moyen issu de l'objection de projection dans la direction du spectateur (horizontale par exemple) : fonction hors d'axe. Les ordres de grandeur des angles d'incidence sur l'écran sont spécifiés sur la figure 2. Ils sont variables d'une extrémité à l'autre de l'écran.
- Diffusion de la lumière autour du rayon moyen.
- Gain d'écran : lobe de diffusion anisotrope, plus large en horizontal qu'en vertical, typiquement plus ou moins 15° en vertical pour plus ou moins 30 à 45° plus moins 45° en horizontal suivant les applications.
- Réalisation de ces fonctions pour les trois primaires chromatiques rouge, vert et bleu sans "color shift".
- Diffusion minimum de la lumière ambiante vers le spectateur pour obtenir un meilleur contraste.

La demande concerne donc un écran de projection holographique à projection « hors d'axe », comportant au moins une couche en matériau photosensible dans lequel au moins un réseau d'indice peut être enregistré par interférence d'une onde optique d'enregistrement et d'une onde optique objet, et il est caractérisé par le fait que l'épaisseur de la couche en matériau photosensible est supérieure ou égale à $n_o \Lambda^2/2\pi\lambda$ et que le réseau de strates d'indices a des propriétés de sélectivité angulaire et spectrale dites de Bragg,

$n_o$ étant l'indice moyen du matériau photosensible;

$\Lambda$ étant le pas moyen du réseau d'indice ;
$\lambda$ étant la longueur d'onde de référence ;

et par le fait qu'il comporte sur la face arrière de la couche photosensible non visible par les spectateurs, une couche en matériau absorbant la lumière de telle façon que ledit écran ne réfléchira que la lumière incidente sur la couche de matériau photosensible selon quasiment le même angle d'incidence que l'onde de référence et que ledit écran sera insensible à la lumière ambiante.

L'invention concerne un procédé de réalisation d'un écran holographique selon la revendication 1.

Les différents objets et caractéristiques de l'invention apparaitront plus clairement dans la description qui va suivre faite à titre d'exemple en se reportant aux figures annexées qui représentent :

- les figures 1 et 2, des schémas explicatifs du système de projection auxquels doit obéir l'invention ;
- les figures 3a et 3b, un exemple de réalisation d'un écran de projection frontal;
- les figures 4a et 4b, un exemple de réalisation d'un écran de rétroprojection;
- la figure 5, un exemple de réalisation compacte d'un dispositif holographique .

L'écran est une structure diffractante de phase qui, éclairée par les rayons issus de l'image à projeter, diffracte une onde diffuse selon un rayon moyen choisi et ayant un lobe de diffusion choisi également, assurant ainsi les deux fonctions diffusion et gain hors d'axe.

Cet écran comporte un hologramme réalisé optiquement, éventuellement en une fois de façon globale et non usiné mécaniquement point par point.

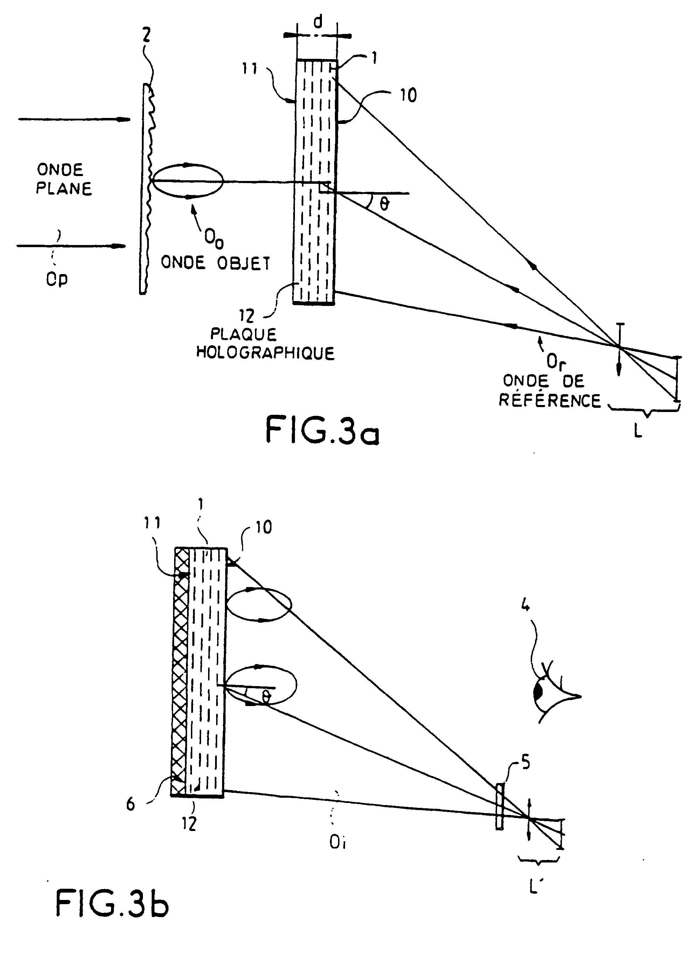

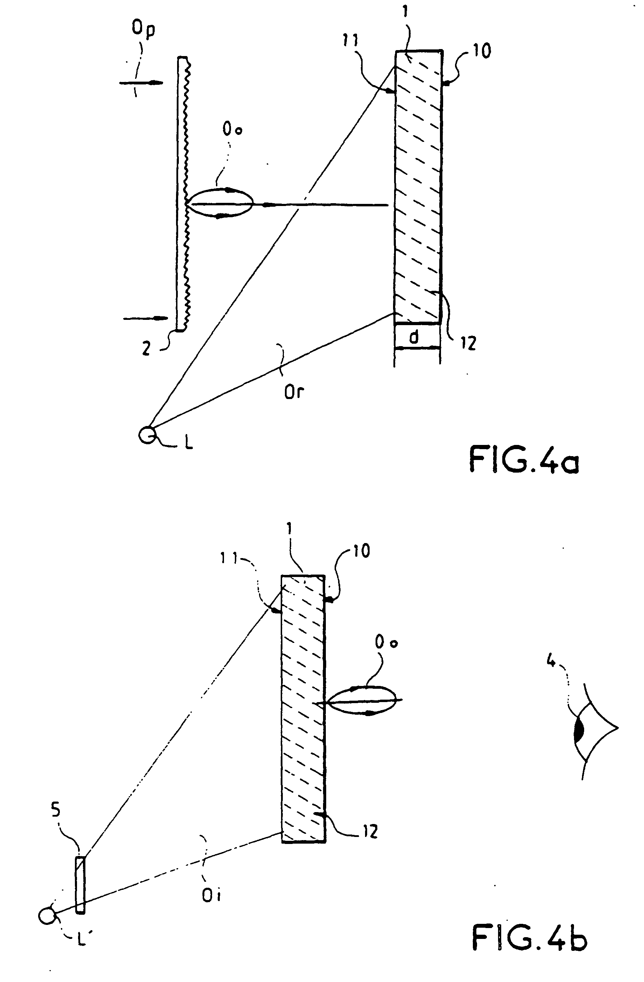

Cet hologramme est enregistré dans une plaque holographique 1 (voir figures 3a, 3b, 4a, 4b) comportant une couche photosensible permettant d'enregistrer l'hologramme. Cette couche photosensible a pour caractéristique d'avoir une épaisseur d qui répond à la relation

$$2\pi\lambda d/n_o\Delta^2 \;>\; = 1'$$

dans laquelle : $\lambda$ = longueur d'onde d'enregistrement

d = épaisseur de la couche photosensible

$n_o$ = indice moyen du milieu photosensible

$\Lambda$ = pas moyen du réseau enregistré

Avec une telle couche photosensible, comme on le verra ci-après, on obtiendra après enregistrement avec une onde Or faisant un angle d'incidence déterminé, un écran qui ne réfléchira que la lumière incidente selon quasiment le même angle et qui sera donc insensible à la lumière ambiante. Le réseau enregistré aura des propriétés de sélectivité angulaire et spectrale dites de Bragg et une forte efficacité de diffraction à la longueur d'onde d'enregistrement.

En se reportant à la figure 3a, on va décrire un procédé de réalisation d'un écran à projection frontale selon l'invention fonctionnant pour une gamme de longueur étroite autour d'une des trois longueurs d'ondes primaires du triangle des couleurs.

Comme cela est représenté sur la figure 3a, on dispose une source lumineuse L éclairant la face 11 d'une plaque holographique avec une onde lumineuse Or sous une incidence de $\theta$ degrés. Un réseau diffuseur de lumière 2 est placé parallèlement à la face 11 de la plaque holographique. De façon préférentielle, le réseau 2 est accolé ou quasiment accolé à la face 11. Le réseau diffuseur reçoit une onde d'éclairement OP et retransmet à la plaque 1 une onde diffusée Oo. De préférence, l'onde objet d'éclairement Op est une onde plane perpendiculaire ou quasi-perpendiculaire à la face 11.

Rappelons tout d'abord qu'un hologramme enregistre les interférences entre une onde objet Oo et une onde de référence Or. L'hologramme une fois développé restitue l'onde objet s'il est éclairé par l'onde de référence. La réponse en fréquence spatiale ($\Lambda$-1) du matériau photosensible de l'hologramme peut être exploitée pour ajuster le lobe de diffusion du faisceau diffracté. On peut donc combiner les caractéristiques du réseau diffuseur et donc des lobes de diffusion de ce réseau avec la réponse du matériau photosensible pour ajuster les lobes de diffusion de l'hologramme à la lecture.

Comme cela est représenté en figure 3a, à l'enregistrement, l'onde objet Oo est constituée de l'onde issue d'un diffuseur 2 éclairé par une onde plane Op se propageant selon l'axe horizontal. Cette onde Oo doit se rapprocher le plus possible de l'onde Os de la figure 2 que l'on souhaite envoyer au spectateur. La plaque optimale ou onde d'enregistrement est l'onde arrivant sur la plaque holographique 1 avec les mêmes caractéristiques angulaire que l'onde Oi de la figure 2.

La plaque holographique 1 comporte un milieu photosensible type photopolymère ou en gélatine bichromatée qui enregistre l'intensité de la figure d'interférence entre les deux ondes Oo et Or sous forme de variations d'indices de réfraction (hologramme de phase).

Le réseau d'indices enregistré dans la plaque 1 est représenté par les traits pointillés 12.

La figure 3b représente l'utilisation de l'écran de la figure 3a convenablement enregistré. Après avoir enregistré l'hologramme, la face 11 est recouverte d'une couche 6 absorbant la lumière.

La face 10 de l'écran est éclairé par une onde de lecture Oi émis par une source lumineuse L' de sensiblement même longueur que la source L de la figure 3a et faisant sensiblement également un angle d'incidence $\theta$ avec la face 10 (comme en figure 3a).

En raison de la réflexion sur le réseau d'indice enregistré dans la plaque 1, celle-ci réfléchit le faisceau Oi et transmet vers le spectateur 4 un faisceau diffusé similaire à l'onde objet Oo. La lumière qui n'est pas incidente sur la face 10 selon l'angle θ traverse la couche 1, atteint la couche absorbante 6 est absorbée par cette couche.

En plaçant entre la source L' et l'écran 1, un modulateur spatial d'intensité lumineuse 5, représentant par exemple une image, on va afficher sur l'écran 1 cette image.

L'efficacité de fonction de diffraction (fonctionnant en réflexion ou en transmission) de 100 % peut être obtenue pour une onde de lecture Oi ayant la même direction et la même longueur d'onde que l'onde de référence Or (condition de Bragg). De plus, pour des valeurs de la modulation d'indice Δη - 0,04-0,07, l'hologramme possède une bande passante angulaire et spectrale importante :

Par exemple, pour le cas précédent avec une variation d'indice de 0,05 si l'on relit l'hologramme avec une onde de largeur spectrale de plus ou moins 30 nm autour de la longueur d'onde d'enregistrement, on aura encore environ 80 % d'efficacité de diffraction. Cette largeur spectrale est typique pour les primaires issues des sources blanches couramment utilisées pour la projection. De même avec une onde ayant une largeur angulaire de plus ou moins 3° en plus d'une largeur spectrale de 60 nm on obtiendra 70 % d'efficacité de diffraction. On peut donc diffracter aisément toute la largeur spectrale d'une primaire donnée.

Par contre la lumière ambiante qui arrive sur l'écran avec une incidence située en-dehors de la bande passante angulaire centrée sur l'incidence de Bragg n'est pas diffractée par l'écran vers le spectateur. Elle est transmise par la couche 1 puis est absorbée par la couche 6 et le contraste de l'image projetée en est renforcé. Ceci constitue un avantage supplémentaire de l'écran holographique.

La figure 4 représente un procédé d'enregistrement d'un écran fonctionnant par rétroprojection.

La couche photosensible 1 de l'écran a les mêmes caractéristiques que décrites précédemment (d >> $n_o \Lambda^2/2\pi\lambda$). L'enregistrement d'un réseau de Bragg se fait comme précédemment par interférence d'une onde de référence Or et d'une onde objet Oo. Ces deux ondes éclairent la même face 11 de la couche photosensible 11. Un réseau de strates 12 est ainsi enregistré.

Pour la lecture, comme cela est représenté en figure 4b, une onde de lecture Oi quasiment identique à l'onde Or en inclinaison et en longueur d'onde éclaire la face 11. Le réseau de strates 12 diffracte ce faisceau et transmet une onde Os vers le spectateur 4. Un modulateur spatial d'intensité lumineuse 5 ou image transparente placé entre la source L' et la face 11 permet ainsi d'afficher par rétroprojection une image contenue dans le modulateur 5.

Dans les deux cas de projection (figures 3b et 4b), il est possible d'obtenir une efficacité de diffraction de 100 % pour la longueur d'onde d'enregistrement.

Toute l'énergie de l'onde Oi dite "de lecture" peut être re-dirigée dans l'axe horizontal avec un lobe de diffusion choisi.

Ces conditions sont réalisées avec par exemple :

λ = 0,535 nm
Λ moyen = 0,2 ; 0,4 μm
$n_o$ = 1,5
d = 8 μm

L'invention présente les avantages suivants :

- Une bonne efficacité lumineuse : l'écran de diffusion très mince absorbe peu de lumière. L'exploitation de l'effet Bragg permet de réaliser les fonctions re-direction + diffusion avec une efficacité d'environ 80 % en tenant compte de l'extension angulaire et spectrale de l'image à projeter.
- Très bon contraste de l'image : la sélectivité Bragg limite la réflexion de l'éclairage ambiant.
- Une technologie simple : l'hologramme s'enregistre en une fois et aucun usinage mécanique n'est nécessaire. Ce n'est pas le cas pour les écrans actuels en transmission qui utilisent des microlentilles de Fresnel usinées de quelques centaines de microns de diamètre pour re-diriger les rayons.
- Une duplication optique du composant une fois le "master" réalisé.
- Aucunes pertes de résolution, liée, dans les écrans classiques, à la taille du grain du diffuseur.

Les exemples qui précèdent fonctionnent avec une longueur d'onde d'enregistrement. La projection est donc monochrome. L'invention est également applicable à la réalisation d'un écran trichromatique.

Selon une première forme de réalisation l'écran de projection comporte une couche en matériau photosensible dans tout le spectre de la lumière visible. L'épaisseur de la couche photosensible est supérieure à $n_o \Lambda^2/2\pi\lambda_m$, dans laquelle $\lambda_m$ est la longueur d'onde moyenne du spectre de longueurs d'ondes auxquelles est sensible à la couche photosensible. Pour réaliser l'écran on enregistre dans la même couche photosensible trois fonctions monochromes. Chaque fonction monochrome est enregistrée comme décrit précédemment à l'aide d'une onde optique dont la longueur d'onde correspond à une longueur d'onde primaire (rouge, vert ou bleu) et dont la direction fait un angle d'incidence θ avec le plan de la couche photosensible. Les enregistrements des trois fonctions monochromes se font simultanément ou séparément selon le même angle d'incidence θ et avec le même réseau diffuseur 2.

Comme cela a été décrit précédemment la projection sur un tel écran se fait avec une source trichrome orientée vers l'écran selon le même angle d'incidence θ. -

Selon une deuxième forme de réalisation l'écran comporte au moins deux couches en matériaux photosensibles. Chacune de ces couches est sensiblement à une longueur d'onde primaire particulière (rouge, vert ou bleu) et est transparente aux autres longueurs d'ondes primaires.

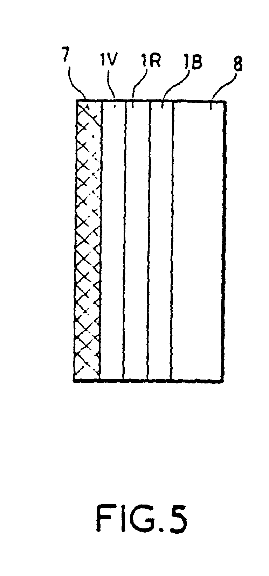

Selon la figure 5, les trois couches 1V, 1R, 1B sont superposées. Elles sont réalisées par exemple sur un support transparent 8. Puis après l'enregistrement des hologrammes dans les couches 1V, 1R, 1B, une couche 6 absorbant la lumière est appliquée sur la face de l'écran non visible par le spectateur (dans le cas de la réalisation d'un écran à projection frontale).

Le procédé de l'invention permet également d'obtenir une dissymétrisation du lobe de diffusion de chaque point de l'écran.

Couramment, les spectateurs étant répartis ou se déplacent dans un plan horizontal par rapport à l'écran.

Pour restituer à la lecture de l'écran diffractant, un diffuseur ayant un lobe de diffusion plus grand en horizontal qu'en vertical, il suffit que le diffuseur "objet" (réseau diffuseur 2) utilise lors de l'enregistrement possède cette propriété : la dissymétrie du lobe de diffusion est alors intégrée à l'écran lors de l'enregistrement des hologrammes. De même si l'on désire un écran ayant plusieurs lobes de diffusion.

Des réseaux diffuseurs assymétriques existent et sont constitués de matrice(s) de microlentilles cylindriques associées à un diffuseur symétrique. On peut également éclairer le réseau diffuseur 2 avec une onde de section non pas circulaire mais elliptique, le grand axe sur l'horizontale. L'onde diffusée aura alors la symétrie de la source.

Il existe également dans le commerce des diffuseurs holographiques ayant des caractéristiques de diffusions assymétriques ou multilobes.

On remarque par ailleurs que l'onde de référence n'est pas obligatoirement rigoureusement égale à l'onde Oi mais dans ce cas l'efficacité de l'écran éclairé par Oi n'est pas optimale.

On remarque également que l'onde éclairant le diffuseur peut être quelconque. Elle ne dépend que de la direction moyenne de diffusion que l'on souhaite à la restitution.

## Revendications

**1.** Procédé de réalisation d'un écran holographique à projection « hors d'axe », selon lequel on enregistre dans une plaque holographique (1) comportant au moins une couche de matériau photosensible au moins un réseau de strates d'indices par interférence d'une onde objet (Oo) et d'une onde de référence (Or), l'hologramme ainsi formé étant un hologramme de volume fonctionnant en régime de Bragg,

      **caractérisé par le fait que** l'on enregistre le réseau de strates d'indices par éclairement de la couche (1) à l'aide de l'onde objet transmise à travers un diffuseur (2), cette onde objet faisant un premier angle d'incidence avec la plaque (1), et **par le fait qu'**elle génere une onde diffuse selon un rayon moyen choisi et ayant un lobe des diffusion choisi dans la direction de l'onde plane éclairant le diffuseur, l'onde de référence éclairant la plaque en faisant un deuxième angle d'incidence (θ) avec le plan de la couche (1), la direction de l'onde objet se rapprochant de celle de l'onde que l'on souhaite envoyer au spectateur.

**2.** Procédé de réalisation d'un écran holographique selon la revendication 8, **caractérisé en ce qu'**on recouvre une face de la couche de matériau photosensible d'une couche (6) d'un matériau absorbant.

**3.** Procédé selon la revendication 1 ou 2, **caractérisé en ce que** la couche (1) en matériau photosensible possède une première face (10) destinée à être visible par les spectateurs et une deuxième face (11) opposée à la première, l'onde objet éclairant la deuxième face et l'onde de référence éclairant la première face de façon à réaliser un écran à projection frontale.

**4.** Procédé selon la revendication 1, **caractérisé en ce que** la couche (1) en matériau photosensible possède une première face (10) destinée à être visible par les spectateurs et une deuxième face (11) opposée à la première, l'onde objet et l'onde de référence éclairant simultanément la deuxième face de façon à réaliser un écran de rétroprojection.

**5.** Procédé selon la revendication 1, **caractérisé en ce qu'**on réalise un empilement de plusieurs couches (1V, 1 R, 1 B) de matériaux actives chacune pour une longueur d'onde déterminée et qu'on enregistre dans chaque couche au moins un réseau de strates à l'aide d'une onde ayant ladite longueur d'onde déterminée.

**6.** Procédé selon la revendication 5, caractérisé en ce qu'on réalise un empilement de trois couches (1V, 1 R, 1B) actives pour l'une des trois longueurs d'ondes primaires du spectre du visible.

**7.** Procédé selon la revendication 1 ou 2, **caractérisé en ce que** la couche (1) en matériau photosensible est en matériau sensible aux trois longueurs d'ondes primaires du spectre du visible.

**8.** Procédé selon l'une des revendications 5 à 7, **caractérisé en ce que** les enregistrements à l'aide des différentes longueurs d'orides se font simultanément ou successivement.

9. Procédé selon la revendication 1 , **caractérisé en ce que** la couche (1) en matériau photosensible possède une première face (10) destinée à être visible par les spectateurs et une deuxième face (11) opposée à la première, la deuxième face étant recouverte d'un matériau absorbant la lumière visible.

**Patentansprüche**

1. Verfahren zur Herstellung eines holographischen Bildschirms mit "achsverlagert" Projektion, gemäß dem man in einer holographischen Platte (1), die mindestens eine Schicht aus lichtempfindlichem Material aufweist, mindestens ein Netz von Indexlagen durch Interferenz einer Objektwelle (Oo) und einer Referenzwelle (Or) aufzeichnet, wobei das so gebildete Hologramm ein Volumen-Hologramm ist, das im Bragg-Betrieb arbeitet, **dadurch gekennzeichnet, dass** man das Netz von Indexlagen durch Belichtung der Schicht (1) mit Hilfe der Objektwelle aufzeichnet, die durch einen Diffusor (2) hindurch übertragen wird, wobei diese Objektwelle einen ersten Einfallwinkel mit der Platte (1) bildet, und dass sie eine Streuwelle gemäß einem ausgewählten mittleren Radius und mit einer Streukeule erzeugt, die in der Richtung der den Diffusor belichtenden ebenen Welle ausgewählt wird, wobei die Referenzwelle die Platte belichtet, indem sie einen zweiten Einfallwinkel (θ) mit der Ebene der Schicht (1) bildet, und wobei die Richtung der Objektwelle sich derjenigen der Welle annähert, die man zum Betrachter senden möchte.

2. Verfahren zur Herstellung eines holographischen Bildschirms nach Anspruch 1, **dadurch gekennzeichnet, dass** man eine Seite der Schicht aus lichtempfindlichem Material mit einer Schicht (6) aus einem absorbierenden Material bedeckt.

3. Verfahren nach Anspruch 1 oder 2, **dadurch gekennzeichnet, dass** die Schicht (1) aus lichtempfindlichem Material eine erste Seite (10), die dazu bestimmt ist, für die Betrachter sichtbar zu sein, und eine zweite, zur ersten entgegengesetzte Seite (11) aufweist, wobei die Objektwelle die zweite Seite belichtet und die Referenzwelle die erste Seite belichtet, um einen Bildschirm mit frontaler Projektion herzustellen.

4. Verfahren nach Anspruch 1, **dadurch gekennzeichnet, dass** die Schicht (1) aus lichtempfindlichem Material eine erste Seite (10), die dazu bestimmt ist, für die Betrachter sichtbar zu sein, und eine zweite, zur ersten entgegengesetzte Seite (11) aufweist, wobei die Objektwelle und die Referenzwelle gleichzeitig die zweite Seite belichten, um einen Bildschirm mit Retroprojektion herzustellen.

5. Verfahren nach Anspruch 1, **dadurch gekennzeichnet, dass** man eine Stapelung von mehreren Schichten (1V, 1R, 1B) von aktiven Materialien je für eine bestimmte Wellenlänge herstellt und in jeder Schicht mit Hilfe einer Welle, die die bestimmte Wellenlänge aufweist, mindestens ein Netz von Lagen aufzeichnet.

6. Verfahren nach Anspruch 5, **dadurch gekennzeichnet, dass** man eine Stapelung von drei aktiven Schichten (1V, 1R, 1B) für je eine der drei Primärwellenlängen des Spektrums des sichtbaren Lichts herstellt.

7. Verfahren nach Anspruch 1 oder 2, **dadurch gekennzeichnet, dass** die Schicht (1) aus lichtempfindlichem Material aus einem Material besteht, das für die drei Primärwellenlängen des Spektrums des sichtbaren Lichts empfindlich ist.

8. Verfahren nach einem der Ansprüche 5 bis 7, **dadurch gekennzeichnet, dass** die Aufzeichnungen mit Hilfe der verschiedenen Wellenlängen gleichzeitig oder nacheinander erfolgen.

9. Verfahren nach Anspruch 1, **dadurch gekennzeichnet, dass** die Schicht (1) aus lichtempfindlichem Material eine erste Seite (10), die dazu bestimmt ist, von den Betrachtern gesehen zu werden, und eine zweite, der ersten entgegengesetzte Seite (11) aufweist, wobei die zweite Seite mit einem das sichtbare Licht absorbierenden Material bedeckt ist.

**Claims**

1. Method of producing a holographic "off-axis" projection screen, in which at least one index grating is recorded in a holographic plate (1), comprising at least one layer of photosensitive material, by interference between an object wave ($W_o$) and a reference wave ($W_r$), the hologram thus formed being a volume hologram operating in the Bragg regime, **characterized in that** the index grating is recorded by illuminating the layer (1) with the object wave transmitted through a diffuser (2), this object wave making a first angle of incidence with the plate (1), and **in that** it generates, along a chosen mid-ray, a diffuse wave having a diffusion lobe chosen in the direction of the plane wave illuminating the diffuser, the reference wave that illuminates the plate making a second angle of incidence (θ) with the plane of the layer (1), the direction of the object wave approaching that of the wave that it is desired to send to the viewer.

2. Method of producing a holographic screen according to Claim 1, **characterized in that** one face of the layer of photosensitive material is covered with a layer (6) of an absorbent material.

3. Method according to Claim 1 or 2, **characterized in that** the layer (1) of photosensitive material possesses a first face (10) intended to be visible by viewers and a second face (11) on the opposite side from the first one, the object wave illuminating the second face and the reference wave illuminating the first face so as to produce a front projection screen.

4. Method according to Claim 1, **characterized in that** the layer (1) of photosensitive material possesses a first face (10) intended to be visible by viewers and a second face (11) on the opposite side from the first one, the object wave and the reference wave simultaneously illuminating the second face so as to produce a backprojection screen.

5. Method according to Claim 1, **characterized in that** a stack of several layers (1G, 1R, 1B) of active materials is produced, each layer for a defined wavelength, and **in that** at least one grating is recorded in each layer using a wave having the said defined wavelength.

6. Method according to Claim 5, **characterized in that** a stack of three active layers (1G, 1R, 1B) is produced for one of the three primary wavelengths of the visible spectrum.

7. Method according to Claim 1 or 2, **characterized in that** the layer (1) of photosensitive material is made of a material sensitive to the three primary wavelengths of the visible spectrum.

8. Method according to one of Claims 5 to 7, **characterized in that** the recordings using the different wavelengths are made simultaneously or in succession.

9. Method according to Claim 1, **characterized in that** the layer (1) of photosensitive material possesses a first face (10) intended to be visible by viewers and a second face (11) on the opposite side from the first one, the second face being covered with a material that absorbs visible light.

RÉFLEXION SPÉCULAIRE CLASSIQUE
+
DIFFUSION AVEC GAIN

F2

REDIRECTION
+
DIFFUSION
AVEC GAIN

F3

▷ SPECTATEUR

RAYON MOYEN
INCIDENT SUR L'ÉCRAN

F1

EC

ÉCRAN

DISPOSITIF DE
PROJECTION D'IMAGES

FIG.1

EP 0 714 522 B1

ÉCRAN

15°

OBSERVATEUR

.6° = $I_i$

OS = ONDE ÉMISE
PAR L'ÉCRAN

$\Delta I_i \sim 1°$

+1,5°

$O_i$ = ONDE INCIDENTE
SUR L'ÉCRAN ISSUE
DE L'OBJECTIF DE PROJECTION

G = × 9
f = 265 mm
f/Ω = 4,5 → $\phi_{lentille}$ = 60
$\phi_{image}$ = 80 mm

FIG.2

FIG.3a

FIG.3b

FIG.4a

FIG.4b

FIG.5